# EUROPEAN PATENT SPECIFICATION

(11) **EP 4 105 116 B1**
(45) Date of publication and mention of the grant of the patent: **10.04.2024**
(21) Application number: 21382534.2
(22) Date of filing: 16.06.2021
(51) Int. Cl.: B63B 75/00, B63B 35/44, B63B 39/06

(54) **FLOATING STRUCTURE FOR SUPPORTING AN OFFSHORE INSTALLATION AND OFFSHORE INSTALLATION**
SCHWIMMENDE STRUKTUR ZUM STÜTZEN EINER OFFSHORE-ANLAGE UND OFFSHORE-ANLAGE
STRUCTURE FLOTTANTE POUR SUPPORTER UNE INSTALLATION EN MER ET INSTALLATION EN MER

(43) Date of publication of application: 21.12.2022
(73) Proprietor: Ikerlan, S. Coop., 20500 Mondragon (ES)
(72) Inventor: REMIREZ JAUREGUI, Adrian, 20500 Arrasate - Mondragon (ES); CABELLO ULLOA, Mario Javier, 20500 Arrasate - Mondragon (ES); MARTINEZ NOGUERA, Félix, 20500 Arrasate - Mondragon (ES)
(74) Representative: Igartua, Ismael

(56) References cited:
- EP-A1- 2 302 205
- EP-A1- 2 867 114
- EP-B1- 2 867 114
- CN-A- 112 575 806
- JP-A- S56 157 683

## Description

### TECHNICAL FIELD

The present invention relates to a floating structure for supporting an offshore installation and an offshore installation supported with the floating structure.

### PRIOR ART

Floating structures which allow offshore installations to be supported in locations far away from the coast without having to build a foundation for the installation in the bed of the sea or lake in which the offshore installation is located are known.

A floating structure for supporting an offshore installation comprises a support structure supporting the offshore installation and at least one floating element which is at least partially submerged in water to provide a buoyancy force to the support structure and thus keep the offshore installation above the surface of the water.

For example, EP2867114A1 shows a floating structure for supporting a wind turbine comprising a float with an ad hoc design providing the buoyancy force to keep the wind turbine above the surface of the water.

### DISCLOSURE OF THE INVENTION

The object of the invention is to provide a floating structure for supporting an offshore installation and an offshore installation supported with the floating structure, as defined in the claims.

One aspect of the invention relates to a floating structure for supporting an offshore installation comprising a support structure supporting the offshore installation and at least one floating element which is at least partially submerged in water to provide a buoyancy force to the support structure, wherein the floating element is a used wind turbine blade which is attached to the support structure supporting the offshore installation.

Another aspect of the invention relates to an offshore installation comprising a floating structure such as the one described above.

According to the invention, the floating structure uses at least one used wind turbine blade to keep the offshore installation afloat above the surface of the water. A wind turbine blade is an element that is particularly suitable for providing a buoyancy force and also for supporting the conditions of swell and underwater currents in which offshore installations built in locations far away from the coast are found.

Wind turbine blades are made from composite materials having a matrix reinforced with a reinforcement material, for example, a polyester or epoxy resin reinforced with glass, carbon, or aramid fibers, and all these elements are cohered and hardened by means of vacuum infusion process or the like, such that a wind turbine blade is a sealed body open only at the root of the blade, which makes it an element suitable for providing the buoyancy force. Furthermore, the matrix reinforced with the reinforcement material allows the blade to have certain flexibility for supporting loads due to the swell or underwater currents, and at the same time presents a structural behavior suitable for supporting the loads to which the blade is subjected by supporting the offshore installation.

Additionally, using used wind turbine blades reduce the cost of the floating structure, since an element that was bound to be disposed of is used rather than manufacturing floats with an ad hoc design. Moreover, many wind turbines today are reaching the end of their service life, so they must be dismantled, such that reusing the used blades of dismantled wind turbines to provide buoyancy to an offshore installation is a sustainable and environmentally friendly solution.

These and other advantages and features of the invention will become apparent in view of the figures and detailed description of the invention.

### DESCRIPTION OF THE DRAWINGS

Figure 1 shows a front view of an example of a floating structure with a single wind turbine blade as a floating element and with a wind turbine supported by the support structure.
Figure 2 shows an example of a used wind turbine blade which can be used as a float.
Figure 3 shows a cross-section view of an example of a used wind turbine blade with internal reinforcements defining compartments for arranging sealed bags.
Figures 4 and 5 show section views of the attachment by means of a leak-proof seal between the root of the blade and the support structure.
Figures 6 to 11 show examples of floating structures with several used wind turbine blades for increasing buoyancy.
Figures 12 and 13 show examples of a floating structure with a stabilization and energy recovery system.
Figures 14 and 15 show examples of floating structures comprising several support structures 10 attached to one another for supporting the offshore installation 2.
Figures 16, 17 and 18 show examples of offshore installations which can be supported with the floating structure of the invention.

### DETAILED DISCLOSURE OF THE INVENTION

The invention relates to a floating structure 1 for supporting an offshore installation 2 on the surface of the water 3 without having to build a foundation for the offshore installation 2 in the bed 4 of the sea or lake in which the offshore installation 2 is located.

The floating structure 1 comprises a support structure 10 supporting the offshore installation 2 and at least one floating element 20 which is at least partially submerged in water to provide a buoyancy force to the support structure 10, wherein the floating element 20 is a used wind turbine blade which is attached to the support structure 10 supporting the offshore installation 2.

In the sense of the present invention, used wind turbine blade is understood to mean a wind turbine blade that has been removed from the wind turbine in which it was arranged given that the wind turbine has reached the end of its operating service life or has been removed from the wind turbine in which it was arranged given that it has sustained damage rendering its normal operation in the wind turbine impossible, even though the blade has not reached the end of the service life for which it had been designed. Used wind turbine blade is also understood to mean a wind turbine blade with faults in its manufacturing process which has not been arranged in a wind turbine. In other words, used wind turbine blade is understood to mean a wind turbine blade which has been disposed of or withdrawn.

The used wind turbine blade 20 has a shell which can be made of composite materials with a matrix which is reinforced with a reinforcement material. For example, the blade 20 can be made of a polyester resin or an epoxy resin reinforced with glass, carbon or aramid fibers, and all these elements are cohered and hardened by means of a vacuum infusion process or the like.

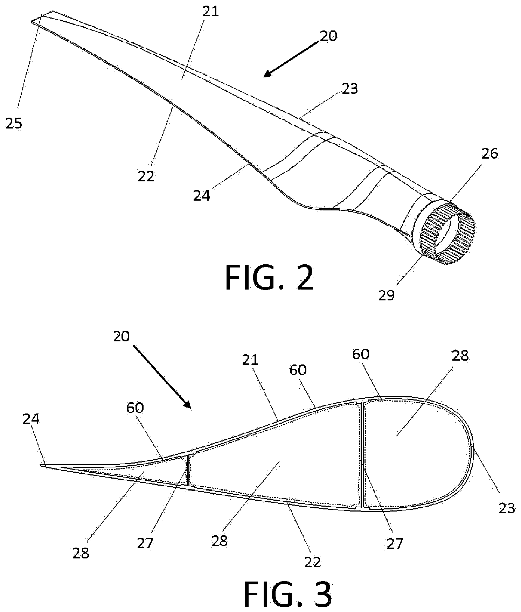

Figure 2 shows an example of a used wind turbine blade 20 which can be used as a floating element. The shell of the blade 20 comprises a suction side profile 21 and a pressure side profile 22 extending transversely between the leading edge 23 and the trailing edge 24 of the blade and extending longitudinally between the tip 25 of the blade and the root 26 of the blade.

The shell is a sealed body open only at the root 26 of the blade 20; therefore, the root 26 of the used wind turbine blade 20 is preferably attached to the support structure 10. The root 26 of the blade 20 is thereby closed by the attachment with the support structure 10.

Even more preferably, the root 26 of the used wind turbine blade 20 is attached to the support structure 10 by means of a leak-proof seal 30, such that the leak-proof seal 30 assures the complete leak-tightness of the blade 20. For example, the leak-proof seal 30 may be necessary when the root 26 of the blade 20 is submerged in water, but when the root 26 of the blade 20 is above the surface of the water 3, the leak-proof seal 30 may not be necessary.

As shown in Figure 2, the root 26 also has bolts 29 which are part of the used wind turbine blade 20 and which, during normal use of the blade in a wind turbine, are used for connecting the blade with the wind turbine hub. Those same bolts 29 can be used for connecting the root 26 of the blade 20 with the support structure 10, such that the bolts 29 are also reused in the floating structure 1.

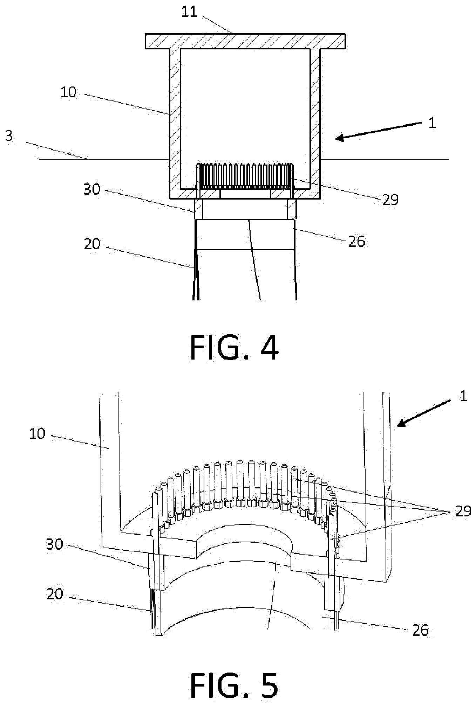

Preferably, as shown in the example of Figures 4 and 5, the root 26 has the bolts 29 which are part of the used wind turbine blade 20 and are inserted into the support structure 10 for attaching the used wind turbine blade 20 to the support structure 10, and the leak-proof seal 30 comprising a sealing gasket through which the bolts 29 pass is arranged between the root 26 of the blade 20 and the support structure 10. The sealing gasket can be an O-ring with a diameter corresponding to the diameter of the root 26 of the blade.

Preferably, the floating structure 1 comprises several used wind turbine blades 20 attached to the support structure 10, with the root 26 of each used wind turbine blade 20 being attached with a respective leak-proof seal 30 to the support structure 10, and wherein the support structure 10 comprises an upper base 11 parallel to the surface of the water 3 supporting the offshore installation 2 and at least two lateral faces 12, with at least one used wind turbine blade 20 being attached to each lateral face 12.

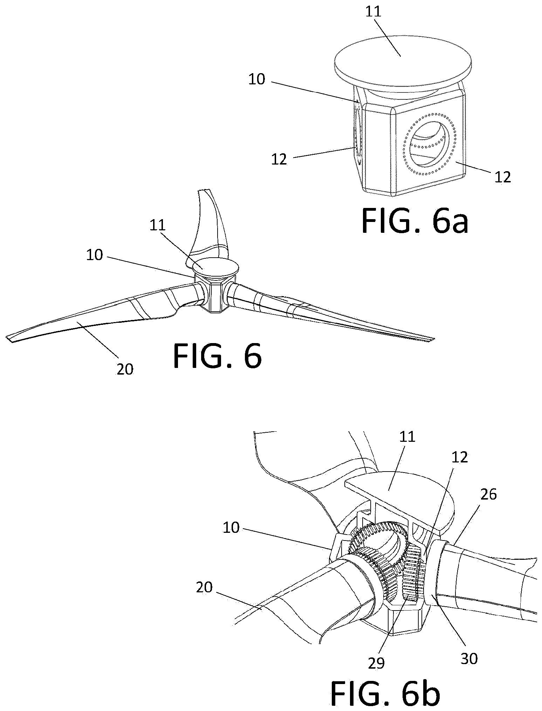

Figures 6 to 11 show various examples of floating structures 1 with several used wind turbine blades 20 which allow the buoyancy force of the support structure 10 to be increased.

Figures 6, 6a and 6b show a floating structure 1 wherein the lateral faces 12 of the support structure 10 are contained in planes perpendicular to the upper base 11, and the used wind turbine blades 20 project perpendicularly from the lateral faces 12 with the blades 20 being parallel to the surface of the water 3. The surface occupied by the blades 20 is thereby maximized, optimizing the stability of the offshore installation 2.

In the example shown in Figure 6, the support structure 10 is a prismatic body with an upper base 11 supporting the offshore installation 2 and three lateral faces 12 perpendicular to the upper base 11, and a used wind turbine blade 20 projects perpendicularly from each lateral face 12. The blades 20 are arranged at equidistant angular positions separated 120°. As observed in Figure 6b, the root 26 of each blade 20 is attached with a leak-proof seal 30 to the respective lateral face 12 of the support structure 10.

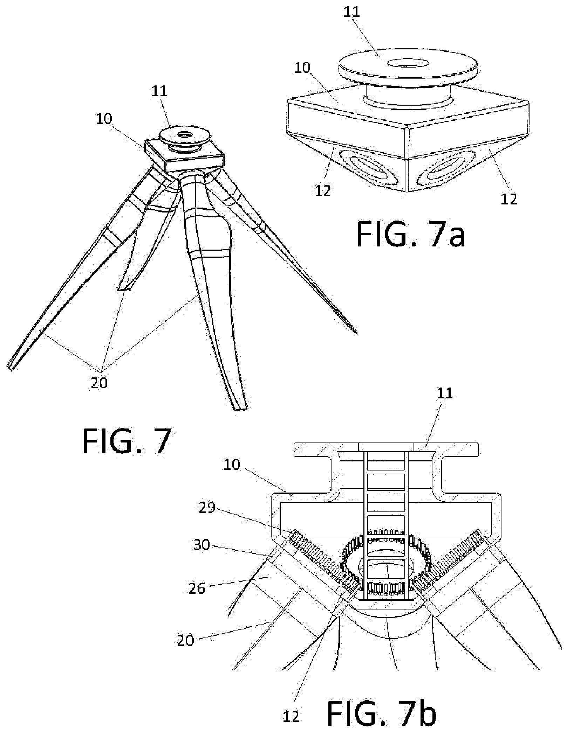

Figures 7, 7a and 7b show a floating structure 1 wherein the lateral faces 12 of the support structure 10 are contained in planes oblique to the upper base 11 and oriented towards the bed 4 of the sea or lake in which the floating structure 1 is arranged, and the used wind turbine blades 20 project perpendicularly from the lateral faces 12, with the blades 20 being in an oblique arrangement with respect to the surface of the water 3. The blades 20 are thereby close to one another, optimizing the space occupied by the floating structure 1.

In the example shown in Figure 7, the support structure 10 is a prismatic body with an upper base 11 supporting the offshore installation 2 and four lateral faces 12 oblique to the upper base 11 and oriented towards the bed 4 of the sea or lake in which the floating structure 1 is arranged, and a used wind turbine blade 20 projects perpendicularly from each lateral face 12. The blades 20 are arranged at equidistant angular positions separated 90°. As observed in Figure 7b, the root 26 of each blade 20 is attached with a leak-proof seal 30 to the respective lateral face 12 of the support structure 10. Unlike Figure 6, the blades 20 are closer to one another, whereby the radial surface occupied by the blades 20 is smaller, which may be suitable for supporting a wind turbine arranged in an offshore farm comprising wind turbines which are close to one another. The floating structure of Figure 6 can have lateral faces 12 oblique to the upper base 11, like in Figure 7, or the floating structure of Figure 7 can have four lateral faces 12 perpendicular to the upper base 11, like those of Figure 6.

As shown in Figure 7b, the support structure 10 has an access hatch in the upper base 11 to provide access to the inside of the support structure 10. Additionally, the support structure 10 has a ladder which allows the roots 26 of the blades 20 to be accessed for repair and inspection tasks. The roots 26 of the blades 20 can have other access hatches for accessing the inside of the blades 20, or the inside of the blades 20 can be communicated directly with the inside of the support structure 10, as shown in Figure 7b. The access hatches and the ladder can be arranged in any of the examples shown in the figures.

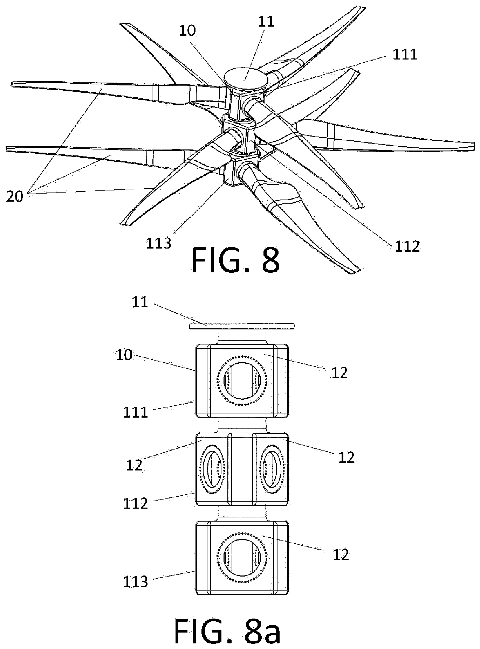

Figures 8 and 8a show a floating structure 1 wherein the support structure 10 comprises an upper segment 111 having the upper base 11, a lower segment 113, and at least one intermediate segment 112 arranged between the upper segment 111 and the lower segment 113, segments 111, 112 and 113 are vertically aligned, and each segment 111, 112 and 113 comprises at least two lateral faces 12, with at least one used wind turbine blade 20 being attached to each lateral face 12. Preferably, the lateral faces 12 of every two continuous segments 111, 112 or 113 are contained in different planes, such that the blades 20 are prevented from interfering with one another.

In the example shown in Figure 8, the support structure 10 comprises three segments 111, 112 and 113 aligned vertically, and each segment 111, 112 and 113 comprises three lateral faces 12 perpendicular to the upper base 11, and a used wind turbine blade 20 projects perpendicularly from each lateral face 12. The lateral faces 12 of the intermediate segment 112 are contained in different planes with respect to the lateral faces 12 of the upper segment 111 and lower segment 113. The floating structure 1 of Figure 8 is a vertical stack of three floating structures 1 like that of Figure 6; nevertheless, it could be a vertical stack of floating structures like that of Figure 7.

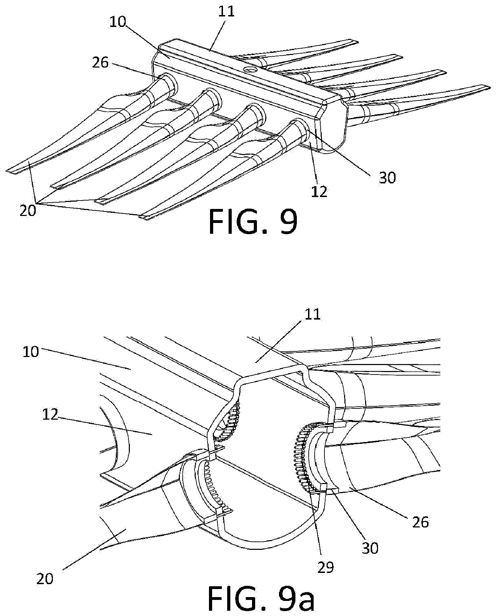

Figures 9, 9a show a floating structure 1 with a rectangular support structure 10 with an upper base 11 and two diametrically opposed lateral faces 12, and wherein several blades 20 project perpendicularly from each lateral face 12, such that the buoyancy of the support structure 10 is increased. The blades 20 which are arranged on the same lateral face 12 are parallel to one another, whereas the blades 20 of one lateral face 12 are diametrically opposed to the blades 20 of the other lateral face 12. As observed in Figure 9b, the root 26 of each blade 20 is attached with a leak-proof seal 30 to the respective lateral face 12 of the support structure 10. Figure 9 depicts four blades 20 on each lateral face 12, but the number of blades 20 can be selected based on the weight of the offshore installation 2 to be supported.

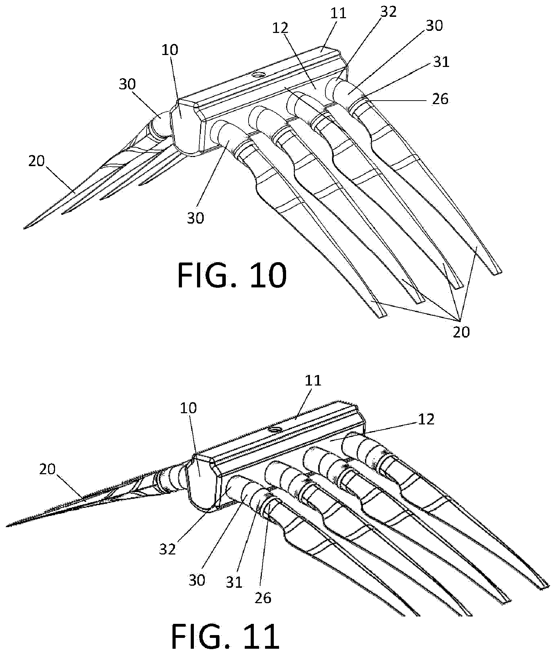

As shown in the examples of Figures 10 and 11, the leak-proof seal 30 is an elastic cylindrical body having a first end 31 which is attached to the root 26 of the used wind turbine blade 20 and a second end 32, opposite the first end 31, which is attached to the support structure 10. The elastic cylindrical body of the seal 30 allows the blade 20 to be connected in a sealed manner with the support structure 10 while at the same time allows the blade 20 to rotate freely with respect to the support structure 10, such that in the case of adverse marine conditions with a high swell or significant marine currents, the blade 20 can freely oscillate without running the risk of the blade 20 becoming disconnected from the support structure 10.

The example of Figures 10 and 11 is identical to the example of Figure 9, except for the leak-proof seals 30 connecting the blades 20 with the support structure 10. Preferably, the root 26 has bolts 29 which are part of the used wind turbine blade 20 and are inserted into the first end 31 of the elastic cylindrical body, and the support structure 10 has other bolts 29' which are inserted into the second end 32 of the elastic cylindrical body.

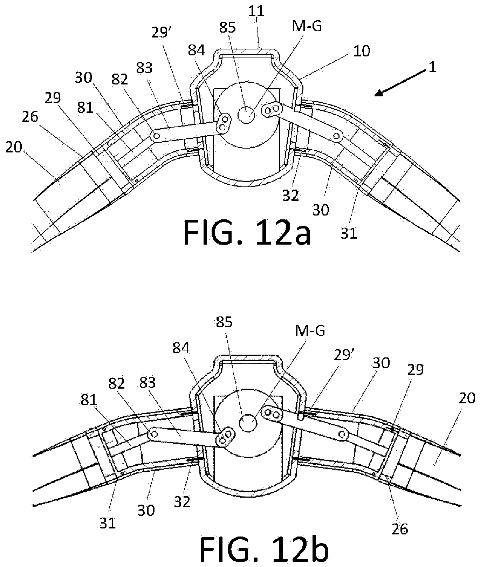

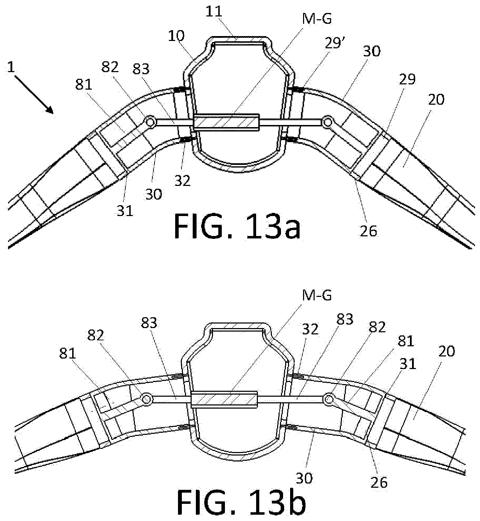

Figures 12 and 13 show examples of a floating structure 1 with a stabilization and energy recovery system. The root 26 of the used wind turbine blade 20 can be mechanically connected with an actuator M to change the orientation of the blade 20 in the water and to actively stabilize the offshore installation 2, and/or the root 26 of the used wind turbine blade 20 can be mechanically connected with a generator G to transform the movements of the blade 20 caused by the swell or the underwater currents into electrical energy. The actuator and the generator can be the same element, or they can be different elements and can be arranged in the support structure 10 or in the offshore installation 2.

The actuator M and/or the generator G can be used in a floating structure 1 having the leak-proof seal 30 of the elastic cylindrical body, since the elastic cylindrical body allows the oscillation of the blade 20 both for being actuated by the actuator M to change orientation in the water and thus being able to actively stabilize the offshore installation 2, and for being able to transform the oscillation movements of the blade 20 into electrical energy by means of the generator G.

Figures 12 and 13 show non-limiting examples of the mechanical connection between the blade and the actuator M and/or the generator G. Figures 12a and 13a show the blades 20 oriented in one position, corresponding with the perspective view of Figure 10, and Figures 12b and 13b show the blades 20 oriented in another position, corresponding with the perspective view of Figure 10. Figures 10, 11, 12 and 13 depict the blades 20 with the same orientation; nevertheless, each blade 20 can be oriented separately. For example, the stabilization system allows each blade 20 to be oriented separately, and when the energy recovery system is active, each blade 20 is free to be oriented in the water according to the swell or marine currents at the installation location. It is even possible for some blades 20 to be operating with the stabilization system, and other blades 20 to be operating with the energy recovery system, such that sea energy can be recovered while at the same time assuring correct stabilization of the offshore installation 2.

The root 26 of the blade 20 is attached to the first end of a first lever 81 having its second end attached by means of a rotating articulation 82 to the first end of a second lever 83 having its second end attached to the actuator M and/or generator G. The actuator M actuates the second lever 83 which in turn actuates the first lever 81, changing the orientation of the blade 20 in the water. Alternatively, the movements of the blade 20 are transmitted to the first lever 81 and from the first lever 81 to the second lever 83 which is connected to the generator G for obtaining electrical energy.

In the example shown in Figures 12a and 12b, the second lever 83 has its second end attached to another rotating articulation 84 which is arranged in a plate integral with a shaft 85 which can be directly or indirectly coupled to the shaft of the actuator M and/or generator G. Said Figures 12a and 12b show two blades 20, and both blades 20 are connected in the same way to the actuator M and/or generator G.

In the example shown in Figures 13a and 13b, the second lever 83 has its second end attached to the movable part of a linear actuator/generator, which can be the actuator M and/or generator G. Said Figures 12a and 12b show two blades 20, and both blades 20 have the second lever 83 connected to the movable part of a linear actuator/generator.

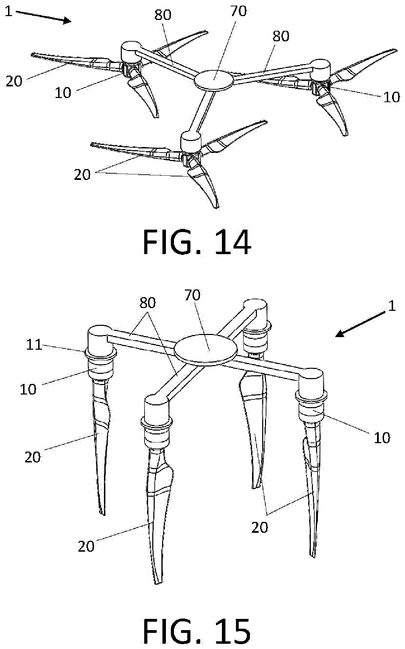

Figures 14 and 15 show examples of floating structures 1 comprising several support structures 10 attached to one another for supporting the offshore installation 2.

Each support structure 10 is attached to a central support 70, and between each support structure 10 and the central support 70 there is arranged an arm 80 having a rotating articulation in at least one point which is arranged between the support structure 10 and the central support 70. Oscillations of the blades 20 due to the swell or underwater currents are thereby not transmitted directly to the central support 70 on which the offshore installation 2 is placed.

Preferably, the arm 80 attaches the upper base 11 of the support structure 10 with the central support 70.

The rotating articulation can be arranged at an intermediate point of the arm 80. Alternatively and/or additionally, the arm 80 can have a first rotating articulation in the attachment between the arm 80 and the upper base 11 of the support structure 10 and a second rotating articulation in the attachment between the arm 80 and the central support 70.

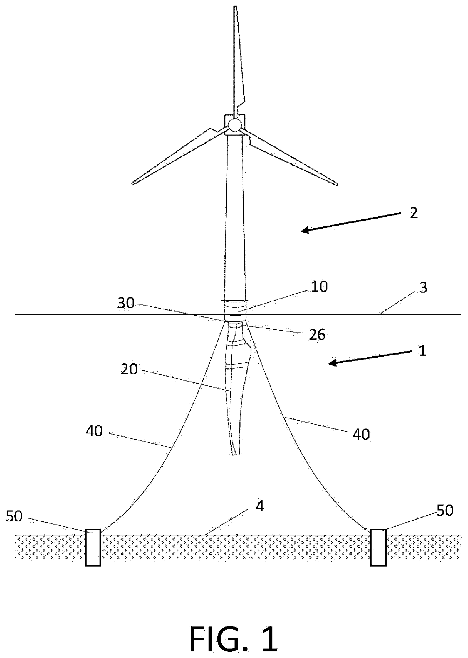

Figure 14 depicts three floating structures like the one of Figure 6 attached by means of a respective arm 80 to the central support 70. Figure 15 depicts four floating structures like the one of Figure 1 attached by means of a respective arm 80 to the central support 70.

Figure 3 shows a cross-section view of an example of a used wind turbine blade 20 which can be used as a floating element. As observed in said Figure 3, the shell can have internal reinforcements 27 defining internal compartments 28. The internal reinforcements 27 extend longitudinally between the suction side profile 21 and the pressure side profile 22 and are reinforcements that are part of the used wind turbine blade 20, commonly referred to as shear webs. Based on the length of the blade, the blade 20 can have one or more internal reinforcements 27, or it can even have no internal reinforcements. Wind turbines initially had a blade diameter of about 15 meters, not requiring internal reinforcements in the blades, but there are wind turbines today with a blade diameter exceeding 120 meters, which blades require internal reinforcements.

When a blade is dismounted from a wind turbine, it is inspected to verify its mechanical strength and tightness, since the blade may have withstood excess loads during its service life, may have been struck by lightning, or may be worn by ice, such that the blade does not work properly as a floating element. Accordingly, the used wind turbine blade 20 can be at least partially covered with a coating to improve its tightness or mechanical strength, preferably a polymer material coating.

The blade can have a partial polymer material coating on a part of the shell which requires being reinforced, which coating can be applied by painting or spraying said part. Alternatively, the blade can have a coating which completely covers the shell of the blade, and it can be applied by immersing the blade in a polymer material fluid bath, or by painting or spraying the blade. The coating which completely covers the shell can be applied on the outside, the inside, or on the outside and the inside of the blade.

Preferably, the floating structure 1 further comprises at least one sealed bag 60 arranged inside the used wind turbine blade 20. The sealed bag 60 acts like a life jacket, assuring long-term buoyancy, since water salinity and other environmental factors may affect the tightness of the blade, causing water seepage. The sealed bag 60 together with the polymer material coating which completely covers the outside of the shell of the blade 20 assure long-term buoyancy in any location. In a blade 20 like the one shown in Figure 3, a sealed bag 60 can be arranged in each of the internal compartments 28.

The floating structure 1 further comprises at least one mooring line 40 attaching the floating structure 10 to the bed 4 of the sea or lake. The mooring line 40 can be formed by an anchoring chain attaching the support structure 10 with an anchoring device 50 arranged in the bed 4 of the sea or lake, such as an anchor or a pile driven into the bed 4. By way of example, Figure 1 shows a floating structure 1 attached by means of two mooring lines 40 to two respective anchoring devices 50 arranged in the bed 4. The mooring lines 40 can be used in any of the examples shown in the figures.

The floating structure 1 can have neutral buoyancy, such that it remains balanced in the water due to its own weight and the thrust exerted thereon by the water. In this case, the mooring line 40 is used to prevent the floating structure 1 from drifting from its location. Alternatively, the floating structure can have positive buoyancy, such that it tends to drift vertically on the surface of the water 3, so in this case the mooring line is used to prevent the floating structure from drifting from its location and also to prevent it from drifting vertically on the surface of the water 3. The buoyancy primarily depends on the difference between the buoyancy force provided by the wind turbine blade 20 and the weight of the floating structure 1 itself and the offshore installation 2.

The floating structure 1 can be used for supporting offshore installations 2 of a different type. Offshore installation is understood to mean an installation which is located in a location far away from the coast of a sea or lake. By way of non-limiting example, the offshore installation can be a wind installation, a solar photovoltaic installation, a thermal solar installation, a tidal energy generation installation, an installation for transforming and converting electrical energy, a telecommunications installation, an oil and gas installation, an oceanographic buoy installation, a meteorological installation, or an aquiculture installation.

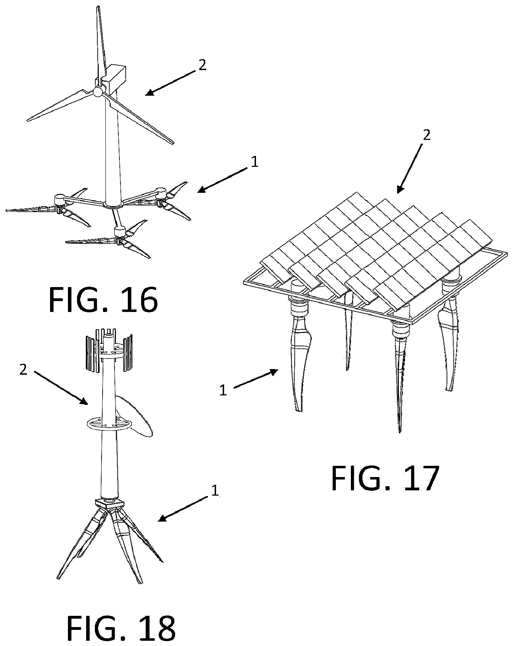

For example, Figure 16 shows a floating structure 1 for a wind installation with a wind turbine 2; Figure 17 shows a floating structure 1 for a solar photovoltaic installation 2; and Figure 18 shows a floating structure 1 for a telecommunications installation 2.

## Claims

1. Floating structure for supporting an offshore installation (2), comprising a support structure (10) supporting the offshore installation (2) and at least one floating element (20) which is at least partially submerged in water to provide a buoyancy force to the support structure (10), **characterized in that** the floating element (20) is a used wind turbine blade which is attached to the support structure (10) supporting the offshore installation (2).

2. Floating structure according to claim 1, wherein the root (26) of the used wind turbine blade (20) is attached to the support structure (10).

3. Floating structure according to claim 2, wherein the root (26) of the used wind turbine blade (20) is attached to the support structure (10) by means of a leak-proof seal (30).

4. Floating structure according to claim 3, wherein the root (26) has bolts (29) which are part of the used wind turbine blade (20) and are inserted into the support structure (10) for attaching the used wind turbine blade (20) to the support structure (10), and the leak-proof seal (30) comprising a sealing gasket through which the bolts (29) pass is arranged between the root (26) of the blade (20) and the support structure (10).

5. Floating structure according to claim 3, wherein the leak-proof seal (30) is an elastic cylindrical body having a first end (31) which is attached to the root (26) of the used wind turbine blade (20) and a second end (32), opposite the first end (31), which is attached to the support structure (10).

6. Floating structure according to the preceding claim, wherein the root (26) has bolts (29) which are part of the used wind turbine blade (20) and are inserted into the first end (31) of the elastic cylindrical body, and the support structure (10) has other bolts (29') which are inserted into the second end (32) of the elastic cylindrical body.

7. Floating structure according to claim 5 or 6, wherein the root (26) of the used wind turbine blade (20) is mechanically connected with an actuator (M) to change the orientation of the blade (20) in the water and to actively stabilize the offshore installation (2), and/or the root (26) of the used wind turbine blade (20) is mechanically connected with a generator (G) to transform the movements of the blade (20) caused by the swell or underwater currents into electrical energy.

8. Floating structure according to any of claims 3 to 7, comprising several used wind turbine blades (20) attached to the support structure (10), with the root (26) of each used wind turbine blade (20) being attached with a respective leak-proof seal (30) to the support structure (10), and wherein the support structure (10) comprises an upper base (11) parallel to the surface of the water (3) supporting the offshore installation (2) and at least two lateral faces (12), with at least one used wind turbine blade (20) being attached to each lateral face (12).

9. Floating structure according to the preceding claim, wherein the lateral faces (12) of the support structure (10) are contained in planes perpendicular to the upper base (11), and the used wind turbine blades (20) project perpendicularly from the lateral faces (12) with the blades (20) being parallel to the surface of the water (3).

10. Floating structure according to claim 8, wherein the lateral faces (12) of the support structure (10) are contained in planes oblique to the upper base (11) and oriented towards the bed (4) of the sea or lake in which the floating structure is arranged, and the used wind turbine blades (20) project perpendicularly from the lateral faces (12), with the blades (20) being in an oblique arrangement with respect to the surface of the water (3).

11. Floating structure according to any of claims 8 to 10, wherein the support structure (10) comprises an upper segment (111) having the upper base (11), a lower segment (113), and at least one intermediate segment (112) arranged between the upper segment (111) and the lower segment (113), the segments (111, 112, 113) are vertically aligned, and each segment (111, 112, 113) comprises at least two lateral faces (12), with at least one used wind turbine blade (20) being attached to each lateral face (12).

12. Floating structure according to any of the preceding claims, comprising several support structures (10) attached to one another for supporting the offshore installation (2), wherein each support structure (10) is attached to a central support (70), and between each support structure (10) and the central support (70) there is arranged an arm (80) having a rotating articulation in at least one point which is arranged between the support structure (10) and the central support (70).

13. Floating structure according to any of the preceding claims, wherein the used wind turbine blade (20) is at least partially covered with a coating.

14. Floating structure according to any of the preceding claims, further comprising at least one sealed bag (60) arranged inside the used wind turbine blade (20).

15. Offshore installation comprising a floating structure according to any of the preceding claims.

## Patentansprüche

1. Schwimmende Struktur zum Stützen einer Offshore-Anlage (2), umfassend eine Stützstruktur (10), welche die Offshore-Anlage (2) stützt, und mindestens ein schwimmendes Element (20), welches mindestens teilweise in Wasser untergetaucht ist, um der Stützstruktur (10) eine Auftriebskraft bereitzustellen, **dadurch gekennzeichnet, dass** das schwimmende Element (20) eine gebrauchte Windturbinenschaufel ist, welche an der Stützstruktur (10) befestigt ist, welche die Offshore-Anlage (2) stützt.

2. Schwimmende Struktur nach Anspruch 1, wobei die Wurzel (26) der gebrauchten Windturbinenschaufel (20) an der Stützstruktur (10) befestigt ist.

3. Schwimmende Struktur nach Anspruch 2, wobei die Wurzel (26) der gebrauchten Windturbinenschaufel (20) an der Stützstruktur (10) mittels einer lecksicheren Abdichtung (30) befestigt ist.

4. Schwimmende Struktur nach Anspruch 3, wobei die Wurzel (26) Bolzen (29) aufweist, welche Teil der gebrauchten Windturbinenschaufel (20) sind und in die Stützstruktur (10) eingeführt sind, um die gebrauchte Windturbinenschaufel (20) an die Stützstruktur (10) zu befestigen, und die lecksichere Abdichtung (30), welche eine Abdichtungsscheibe umfasst, durch welche die Bolzen (29) durchgehen, zwischen der Wurzel (26) der Schaufel (20) und der Stützstruktur (10) angeordnet ist.

5. Schwimmende Struktur nach Anspruch 3, wobei die lecksichere Abdichtung (30) ein elastischer zylindrischer Körper ist, welcher ein erstes Ende (31), welches an der Wurzel (26) der gebrauchten Windturbinenschaufel (20) befestigt ist, und ein zweites Ende (32), dem ersten Ende (31) gegenüberliegend, welches an der Stützstruktur (10) befestigt ist, aufweist.

6. Schwimmende Struktur nach dem vorhergehenden Anspruch, wobei die Wurzel (26) Bolzen (29) aufweist, welche Teil der gebrauchten Windturbinenschaufel (20) sind und in das erste Ende (31) des elastischen zylindrischen Körpers eingeführt sind, und die Stützstruktur (10) andere Bolzen (29') aufweist, welche in das zweite Ende (32) des elastischen zylindrischen Körpers eingeführt sind.

7. Schwimmende Struktur nach Anspruch 5 oder 6, wobei die Wurzel (26) der gebrauchten Windturbinenschaufel (20) mit einem Aktuator (M) mechanisch verbunden ist, um die Orientierung der Schaufel (20) im Wasser zu ändern und die Offshore-Anlage (2) aktiv zu stabilisieren, und/oder die Wurzel (26) der gebrauchten Windturbinenschaufel (20) mit einem Generator (G) mechanisch verbunden ist, um die Bewegungen der Schaufel (20), welche vom Wellengang oder von den Unterwasserströmungen verursacht werden, in elektrische Energie umzuwandeln.

8. Schwimmende Struktur nach einem der Ansprüche 3 bis 7, umfassend mehrere gebrauchten Windturbinenschaufeln (20), welche an der Stützstruktur (10) befestigt sind, wobei die Wurzel (26) jeder gebrauchten Windturbinenschaufel (20) mit einer jeweiligen lecksicheren Abdichtung (30) an der Stützstruktur (10) befestigt ist, und wobei die Stützstruktur (10) eine obere Basis (11), welche parallel zur Oberfläche des Wassers (3) ist und die Offshore-Anlage (2) stützt, und mindestens zwei Seitenflächen (12) umfasst, wobei mindestens eine gebrauchte Windturbinenschaufel (20) an jeder Seitenfläche (12) befestigt ist.

9. Schwimmende Struktur nach dem vorhergehenden Anspruch, wobei die Seitenflächen (12) der Stützstruktur (10) in Ebenen enthalten sind, welche senkrecht zur oberen Basis (11) sind, und die gebrauchten Windturbinenschaufeln (20) senkrecht von den Seitenflächen (12) aus hervorstehen, wobei die Schaufeln (20) parallel zur Oberfläche des Wassers (3) sind.

10. Schwimmende Struktur nach Anspruch 8, wobei die Seitenflächen (12) der Stützstruktur (10) in Ebenen enthalten sind, welche schräg zur oberen Basis (11) sind und zum Grund (4) des Meers oder Sees hin, in welchem die schwimmende Struktur angeordnet ist, orientiert sind, und die gebrauchten Windturbinenschaufeln (20) senkrecht von den Seitenflächen (12) aus hervorstehen, wobei die Schaufeln (20) in einer schrägen Anordnung in Bezug auf die Oberfläche des Wassers (3) sind.

11. Schwimmende Struktur nach einem der Ansprüche 8 bis 10, wobei die Stützstruktur (10) ein oberes Segment (111), welches die obere Basis (11) aufweist, ein unteres Segment (113) und mindestens ein Zwischensegment (112), welches zwischen dem oberen Segment (111) und dem unteren Segment (113) angeordnet ist, umfasst, wobei die Segmente (111, 112, 113) vertikal ausgerichtet sind und jedes Segment (111, 112, 113) mindestens zwei Seitenflächen (12) umfasst, wobei mindestens eine gebrauchte Windturbinenschaufel (20) an jeder Seitenfläche (12) befestigt ist.

12. Schwimmende Struktur nach einem der vorhergehenden Ansprüche, umfassend mehrere Stützstrukturen (10), welche aneinander befestigt sind, zum Stützen der Offshore-Anlage (2), wobei jede Stützstruktur (10) an einer zentralen Stütze (70) befestigt ist, und wobei es zwischen jeder Stützstruktur (10) und der zentralen Stütze (70) ein Arm (80) angeordnet ist, welches ein Drehgelenk in mindestens einem Punkt, welcher zwischen der Stützstruktur (10) und der zentralen Stütze (70) angeordnet ist, aufweist.

13. Schwimmende Struktur nach einem der vorhergehenden Ansprüche, wobei die gebrauchte Windturbinenschaufel (20) mindestens teilweise mit einer Beschichtung bedeckt ist.

14. Schwimmende Struktur nach einem der vorhergehenden Ansprüche, zusätzliche umfassend mindestens einen abgedichteten Beutel (60), welcher innerhalb der gebrauchten Windturbinenschaufel (20) angeordnet ist.

15. Offshore-Anlage umfassend eine schwimmende Struktur nach einem der vorhergehenden Ansprüche.

## Revendications

1. Structure flottante pour supporter une installation en mer (2), comprenant une structure de support (10) supportant l'installation en mer (2) et au moins un élément flottant (20) qui est au moins partiellement immergé dans l'eau pour fournir une force de flottabilité à la structure de support (10), **caractérisée en ce que** l'élément flottant (20) est une pale de turbine éolienne utilisée qui est fixée à la structure de support (10) supportant l'installation en mer (2).

2. Structure flottante selon la revendication 1, dans laquelle l'emplanture (26) de la pale de turbine éolienne utilisée (20) est fixée à la structure de support (10).

3. Structure flottante selon la revendication 2, dans laquelle l'emplanture (26) de pale de turbine éolienne utilisée (20) est fixée à la structure de support (10) au moyen d'un scellage étanche aux fuites (30).

4. Structure flottante selon la revendication 3, dans laquelle l'emplanture (26) a des boulons (29) qui font partie de la pale de turbine éolienne utilisée (20) et sont insérés dans la structure de support (10) pour fixer la pale de turbine éolienne utilisée (20) à la structure de support (10), et le scellage étanche aux fuites (30) comprenant un joint d'étanchéité à travers lequel passent les boulons (29) est placé entre l'emplanture (26) de la pale (20) et la structure de support (10).

5. Structure flottante selon la revendication 3, dans laquelle le scellage étanche aux fuites (30) est un corps cylindrique élastique ayant une première extrémité (31) qui est fixée à l'emplanture (26) de la pale de turbine éolienne utilisée (20) et une deuxième extrémité (32), opposée à la première extrémité (31), qui est fixée à la structure de support (10).

6. Structure flottante selon la revendication précédente, dans laquelle l'emplanture (26) a des boulons (29) qui font partie de la pale de turbine éolienne utilisée (20) et sont insérés dans la première extrémité (31) du corps cylindrique élastique, et la structure de support (10) a d'autres boulons (29') qui sont insérés dans la deuxième extrémité (32) du corps cylindrique élastique.

7. Structure flottante selon la revendication 5 ou 6, dans laquelle l'emplanture (26) de la pale de turbine éolienne utilisée (20) est mécaniquement reliée avec un actionneur (M) pour changer l'orientation de la pale (20) dans l'eau et stabiliser activement l'installation en mer (2), et/ou l'emplanture (26) de la pale de turbine éolienne utilisée (20) est reliée mécaniquement à un générateur (G) pour transformer les mouvements de la pale (20) provoqués par la houle ou les courants sous-marins en énergie électrique.

8. Structure flottante selon l'une quelconque des revendications 3 à 7, comprenant plusieurs pales de turbine éolienne utilisées (20) fixées à la structure de support (10), l'emplanture (26) de chaque pale de turbine éolienne utilisée (20) étant fixée avec un scellage étanche aux fuites (30) respectif à la structure de support (10), et dans laquelle la structure de support (10) comprend une base supérieure (11) parallèle à la surface de l'eau (3) supportant l'installation en mer (2) et au moins deux faces latérales (12), au moins une pale de turbine éolienne utilisée (20) étant fixée à chaque face latérale (12).

9. Structure flottante selon la revendication précédente, dans laquelle les faces latérales (12) de la structure de support (10) sont contenues dans des plans perpendiculaires à la base supérieure (11), et les pales de turbine éolienne utilisées (20) dépassent perpendiculairement des faces latérales (12), les pales (20) étant parallèles à la surface de l'eau (3).

10. Structure flottante selon la revendication 8, dans laquelle les faces latérales (12) de la structure de support (10) sont contenues dans des plans obliques à la base supérieure (11) et orientées vers le fond (4) de la mer ou du lac dans lequel la structure flottante est disposée, et les pales de turbine éolienne utilisées (20) dépassent perpendiculairement des faces latérales (12), les pales (20) étant dans une disposition oblique par rapport à la surface de l'eau (3).

11. Structure flottante selon l'une quelconque des revendications 8 à 10, dans laquelle la structure de support (10) comprend un segment supérieur (111) ayant la base supérieure (11), un segment inférieur (113) et au moins un segment intermédiaire (112) disposé entre le segment supérieur (111) et le segment inférieur (113), les segments (111, 112, 113) sont alignés verticalement, et chaque segment (111, 112, 113) comprend au moins deux faces latérales (12), au moins une pale de turbine éolienne utilisée (20) étant fixée sur chaque face latérale (12).

12. Structure flottante selon l'une quelconque des revendications précédentes, comprenant plusieurs structures de support (10) attachées les unes aux autres pour supporter l'installation en mer (2), dans laquelle chaque structure de support (10) est fixée à un support central (70), et entre chaque structure de support (10) et le support central (70) il y a un bras (80) disposé ayant une articulation rotative à au moins un point qui est disposé entre la structure de support (10) et le support central (70).

13. Structure flottante selon l'une quelconque des revendications précédentes, dans laquelle la pale de turbine éolienne utilisée (20) est au moins partiellement recouverte d'un revêtement.

14. Structure flottante selon l'une quelconque des revendications précédentes, comprenant en outre au moins un sac étanche (60) disposé à l'intérieur de la pale de turbine éolienne utilisée (20).

15. Installation en mer comprenant une structure flottante selon l'une quelconque des revendications précédentes.
